# EUROPÄISCHE PATENTSCHRIFT

(11) **EP 3 436 757 B1**
(45) Veröffentlichungstag und Bekanntmachung des Hinweises auf die Patenterteilung: **22.01.2020**
(21) Anmeldenummer: 17713947.4
(22) Anmeldetag: 28.03.2017
(51) Int. Cl.: F28D 5/02, F28D 9/00, F28D 21/00, F24F 5/00, F24F 12/00

(54) **KLIMATISIERUNG DURCH MEHRPHASEN-PLATTENWÄRMETAUSCHER**
AIR-CONDITIONING VIA MULTI-PHASE PLATE HEAT EXCHANGER
CLIMATISATION PAR ÉCHANGEURS DE CHALEUR À PLAQUES À PHASE MULTIPLES

(30) Priorität: 31.03.2016 AT 1672016
(43) Veröffentlichungstag der Anmeldung: 06.02.2019
(73) Patentinhaber: KUNZE, Gerhard, 3012 Wolfsgraben (AT)
(72) Erfinder: KUNZE, Gerhard, 3012 Wolfsgraben (AT)
(74) Vertreter: Gibler & Poth Patentanwälte KG
(86) Internationale Anmeldenummer: PCT/EP2017/057275
(87) Internationale Veröffentlichungsnummer: WO 2017/167729

(56) Entgegenhaltungen:
- WO-A1-2004/085946
- WO-A1-2016/037232
- DE-A1- 2 033 206
- DE-A1-102010 011 707
- US-A1- 2005 210 907

## Beschreibung

### Einleitung

Raumklimatisierung verbraucht einen hohen Anteil des globalen Elektrizitätsangebotes und trägt damit auch zur CO2 Bilanz der Erde bei. Energieeinsparung kann durch Wärmerückführung, insbesondere über Wärmetauscher erfolgen. Wärme wird aber nicht nur in der Wärmekapazität der betroffenen Stoffe sondern mehr noch in der Enthalpie des beteiligten Wasserdampfes gespeichert oder transportiert. Wärmerückführung kann nur dann effizient stattfinden, wenn Abkühlung und Erwärmung, Kondensation und Verdampfung simultan und am gleichen Ort stattfinden. Das erfordert eine Neukonzeption des Wärmetauscherprinzips, die hier beschrieben werden soll.

### Stand der Technik

Klimatisierung erfolgt im Sommer vorzugsweise durch elektrisch betriebene Kältemaschinen oder im Winter durch Verbrennung von brennbaren Substanzen. Zur Erreichung eines behaglichen Klimas muss in der Regel Wasserdampf aus der Luft durch Kondensation ausgeschieden oder durch Verdampfung hinzugefügt werden. Der dafür nötige Energieaufwand ist in Extremfällen ein Vielfaches dessen, was zum bloßen Abkühlen oder Erwärmen der dampffreien Luft über das gleiche Temperaturintervall nötig wäre. Das Kondensationswasser wird verworfen, anstatt es für eine Verdampfungskühlung zu nützen.

So genannte geregelte Ventilation soll unter Verwendung von Luft/Luft-Wärmetauschern beim Energiesparen helfen. Im Winter ist es damit zwar möglich die Außentemperatur nahezu auf Innenraumtemperatur zu bringen, aber diese erwärmete Frischluft ist extrem trocken und muss nachträglich unter Energiezufuhr befeuchtet werden. Im Sommer ist das Problem noch schlimmer: Da die Enthalpiedifferenz zwischen feuchter heißer Außenluft und kühler trockener Innenluft viel größer ist, als die Enthalpiedifferenz zwischen trockener Innenluft und derselben Luft auf Außentemperatur, kann durch einen solchen Wärmetausch immer nur ein sehr kleiner Beitrag zur Reduktion der erforderlichen Kühlleistung erbracht werden.

In der Patentschrift A192/2015 wird daher ein Luft/Luft-Wärmetauscher beschrieben, wo das bei der Abkühlung gebildete Kondensat aus der Frischluft der Abluft zugeführt wird, um in diese hinein zu verdampfen und dabei die frei werdende Kondensationswärme als Verdampfungswärme zu kompensieren.

Eine wirkliche Kühlung der Luft unter die Temperatur, die im zu klimatisierenden Raum herrscht, welche nötig wäre um andere Wärmeeinträge wie Sonneneinstrahlung oder Computerwärme zu beseitigen, kann jedoch nicht stattfinden. Daher muss bei diesem Konzept immer noch ein aktives Zweitkühlsystem eingesetzt werden, das üblicherweise mehr als die Hälfte der gesamten Kühllast zu tragen hat.

Ein zusätzliches Problem ergibt sich aus der Tatsache, dass eine konstante Befeuchtung der Wärmetauscherflächen zu Bakterien- oder sonstigem Mikrobenbewuchs führen kann, was in weiterer Folge zu Verstopfung oder gar zu Übertragung von Krankheiten führen könnte.

Aus der DE 10 2010 011707 A1 ist einen Wärmetauscher zwischen Zu- und Abluft gemäß dem Oberbegriff des Anspruchs 1 bekannt, wo diese beiden Luftströme durch eine Wärme leitende Wand getrennt sind, die auf beiden Seiten eine hydrophile Oberfläche besitzt, sodass auf der einen Seite hygroskopische Flüssigkeit warmer feuchter Luft durch Sorption Wasserdampf unter Wärmeabgabe entzieht und diese Wärme durch die Trennwand hindurch auf deren anderer Seite in einem kälteren Luftstrom Wasser aus einer stark wässerigen hygroskopischen Lösung verdampft. wodurch die kältere Luft erwärmt und die wärmere Luft gekühlt wird. Gleichzeitig soll sich dabei die im warmen Bereich des Wärmetauschers durch Sorption mit Wasser angereicherte hygroskopische Lösung im kalten Bereich des Wärmetauschers durch Verdampfung wieder regenerieren.

Aus der WO 2016/037232 A1 ist ein indirekter Verdampfungskühler bekannt, wobei der Verdampfungskühler einen Plattenwärmetauscher aufweist, wobei in einem ersten Strömungspfad die Luft durch einen trockenen Bereich des Plattenwärmetauschers geleitet wird, und am Ende des ersten Strömungspfades ein Teil der Luft durch einen zweiten, befeuchteten Strömungspfad in eine entgegengesetzte Richtung geleitet wird, so dass die im zweiten Strömungspfad erfolgte Kühlung durch die Verdampfung die Luft im ersten Strömungspfad kühlt.

Aus der US 2005/0210907 A1 ist ebenfalls ein indirekter Verdampfungskühler bekannt, wobei das Gas bereits im ersten Strompfad zum Teil in den zweiten Strompfad geleitet wird.

Aus der DE 20 33 206 A1 ist eine Vorrichtung zum Trocknen von Luft in einem Vielkanalsystem bekannt, wobei durch die Verdunstung in den benachbarten Kammern die Luft abgekühlt und getrocknet wird. Zum Befeuchten der Wände, beziehungsweise Regenerieren des Sorptionsmittels, ist eine bewegliche Vorrichtung vorgesehen.

Aus der WO 2004/085946 A1 ist ein Plattenwärmetauscher bekannt, über welchen eine Sprühvorrichtung zur zusätzlichen Abkühlung der Luft angeordnet ist.

### Aufgabenstellung

Im Prinzip sollte durch einen geeigneten Wärmetauscher im Sommer die gesamte Kühlleistung durch Verdampfungskühlung erreicht werden können, weil die Enthalpiedifferenz zwischen trockener Innenluft und mit Dampf gesättigter Luft auf Außentemperatur immer größer sein muss als die Enthalpiedifferenz zwischen feuchter heißer Außenluft und kühler trockener Innenluft. In der Praxis ist dieser Vergleich aber aus Entropiegründen nicht ganz zutreffend.

Immerhin ist in vielen klimatischen Situationen, eine reine Verdampfungskühlung möglich, wenn man nur dem Wärmetauscher genug Wasser auf der Abluftseite zuführt. In Fällen wo die Luftfeuchtigkeit zu hoch ist kann die Luft durch hygroskopische Lösung abgesenkt werden.

Umgekehrt ist für die Erwärmung von kalter feuchter Luft in der kalten Jahreszeit eine Erwärmung dieser Luft durch hygroskopische Trocknung derselben möglich.

Die Aufgaben der Erfindung sind also folgende:
- Klimatisierung von Räumen durch Verdampfungskühlung, beziehungsweise eine Beheizung durch hygroskopische Lufttrocknung für unterschiedliche Klimaverhältnisse der äußeren Umgebung
- Hygienische Bedingungen im Wärmetauscher
- Regelung der Luftfeuchtigkeit in den zu klimatisierenden Räumen durch eine hygroskopische Lösung oder Wasserverdunstung
- Regenerierung der hygroskopischen Lösung nachdem diese Wasser aufgenommen hat, wobei es möglicherweise zu Kristallisationsprozessen kommen kann, die den gesamten Prozess nicht stören dürfen, durch das gleiche Gerät
- Eine möglichst kompakte Bauweise für das ganze Gerät

### Lösung der gestellten Aufgaben und Unteraufgaben sowie die daraus erwartbaren Ergebnisse

Die Aufgabe Klimatisierung von Räumen durch reine Verdampfungskühlung beziehungsweise eine Beheizung durch hygroskopische Lufttrocknung zu bewerkstelligen wird erfindungsgemäß durch einen neuartigen Mehrphasen-Plattenwärmetauscher und ein Verfahren zum Betreiben eines solchen Wärmetauschers gemäß Anspruch 1 bzw. Anspruch 5 bewerkstelligt.

Ein Mehrphasenwärme-Plattenwärmetauscher ist ein Plattenwärmetauscher für zwei gasförmige Medien mit unterschiedlicher Temperatur und mit unterschiedlichem Dampfgehalt, die im Gegenstrom oder Parallelstrom von je einem regulierbaren Gebläse bewegt werden, wobei die aktive Wärmeübertragungsfläche zwischen den betroffenen Medien auf einer oder auf beiden Oberflächen von einer oder von zwei verschiedenen langsam fließenden Flüssigkeiten benetzt werden, die mit den jeweiligen Medien in direkter Wechselwirkung stehen, so dass Verdampfung oder Kondensation und wegen der dabei eintretenden Konzentrationsänderungen in den Flüssigkeiten auch Kristallisation oder Lösung von Kristallen stattfinden kann, wobei diese Flüssigkeiten von außen zu ihren spezifischen Eingangspositionen zwischen den Wärmetauscherplatten gepumpt werden und sich von dort den Kräften von Kapillarwirkung, Luftströmung, Verwirbelung, Gravitation beziehungsweise den Zwangskräften von besonderen Plattenausformungen folgend als mehr oder weniger dicker Flüssigkeitsfilm durch den Plattenwärmetauscher bewegen, so dass zusammengehörige Medien und Flüssigkeiten häufig nicht in der gleichen Richtung fließen.

Um einen solchen Mehrphasenwärmetauscher erfolgreich zu betreiben ergibt sich die zusätzliche Aufgabe, die genannten Flüssigkeiten in die Spalten des Wärmetauschers tropfenweise einzubringen, wobei aber die eingebrachte Menge pro Spalt nicht stark variieren soll. Um diese Aufgabe zu lösen gibt es drei Methoden:
- die Flüssigkeitszufuhr von einem Speichertank zu den Eingangspositionen zwischen den Wärmetauscherplatten so erfolgen zu lassen, dass sich die Zuleitung nach der Pumpe zu einem Bündel von Kapillarrohren oder - schläuchen auffächert, die an den entsprechenden Bestimmungsorten im Wärmetauscher münden.
- die Flüssigkeitszufuhr von einem Speichertank zu den Eingangspositionen zwischen den Wärmetauscherplatten so erfolgen zu lassen, dass die Zuleitung nach der Pumpe zu einem gemeinsamen Verbindungskanal zwischen den Wärmetauscherplatten führt, der aus kongruent korrespondierenden Durchbrüchen durch diese Platten gebildet ist, wobei in jedem Plattenspalt, in den Flüssigkeit eingeführt werden soll, eine Drossel für den tropfenweisen Flüssigkeitsdurchgang vom Verbindungskanal in den Spalt vorgesehen ist.
- Die Flüssigkeit vor den Plattenspalteneingängen aus Düsen zu versprühen, wobei die dabei entstehenden Tropfen nicht zu klein sein sollen, um eine Wechselwirkung mit der Luft vor dem Aufprall der Tropfen auf die zu benetzenden Flächen gering zu halten. Diese Anordnung empfiehlt sich vor allem bei großen Anlagen.

Experimente haben gezeigt, dass die Flüssigkeitszufuhr durch Kapillaren zwar vom Aufwand her deutlich komplizierter und teurer ist, als die Alternative eines gemeinsamen Verbindungskanals quer durch alle Platten, dafür aber die gleichmäßige Verteilung der Flüssigkeit über alle Platten wesentlich genauer ist, wodurch der Wirkungsgrad der Anlage wesentlich besser wird.

Ebenfalls aus Experimenten hat sich ergeben, dass eine genaue Dosierung der zuzuführenden Flüssigkeiten allein durch Kapillaren oder Düsen sehr ungenau ist, weil kleinste Verunreinigungen den Strömungswiderstand und damit auch die Durchflussmenge bei gleicher Pumpenstärke verändern können. Besser ist es daher, die Pumpen in kürzen Stößen arbeiten zu lassen, wobei die Stoßdauer und der zeitliche Abstand zwischen den Stößen entsprechend der Messdaten von geeigneten Sensoren variiert werden können, welche die Wärmeübertragung sowie Verdampfungs- und Kondensationsleistung im Wärmetauscher ermitteln.

Sobald die genannten Flüssigkeiten in der korrekten Menge zu den Plattenoberflächen geführt worden sind, ergibt sich die nächste Aufgabe, nämlich diese Plattenoberflächen gleichmäßig zu benetzen.

Diese Aufgabe wird dadurch gelöst, dass die Oberflächen der aktiven Wärmeübertragungsflächen die gleichmäßige Verteilung des Flüssigkeitsfilms beziehungsweise die lokale Festhaltung von Kristallen oder deren Weitertransport durch Rillen, feinporöse Oberfläche, Schleifspuren, Kratzer und/oder Faserbeschichtung, sowie Beschichtungen durch hydrophile Materialien oder aber auch durch eine Kombination mehrerer solcher Maßnahmen begünstigen. Experimentell hat sich auch eine Beschichtung der Wärmeübertragungsflächen mit super-hydrophilen Ti02 Nano-Kristallen als sehr zweckmäßig gezeigt.

Um die Aufgabe der Regelung der Luftfeuchtigkeit in den zu klimatisierenden Räumen durch eine hygroskopische Lösung oder verdunstendes Wasser zu lösen, bietet sich einerseits die Möglichkeit eines iso-enthalpischen Übergangs an, und andererseits kann eine zusätzliche Erwärmung oder Kühlung nötig sein. Ein isoenthalpischer Übergang kann in dem erfindungsgemäßen Mehrphasenwärmetauscher dadurch erreicht werden, dass man den gleichen Luftstrom in die Primärseite und in die Sekundärseite des genannten Wärmetauschers einführt so dass diese beiden Ströme parallel und in gleicher Richtung fließen, wobei zur Benetzung der Wärmetauscherflächen in beiden Strömen die gleiche Flüssigkeit verwendet wird. Ist diese Flüssigkeit Wasser, so wird beim iso-enthalpischen Übergang der Luftstrom gekühlt, während er sich gleichzeitig mit Wasserdampf sättigt. Ist diese Flüssigkeit dagegen eine hygroskopische Lösung, so wird beim iso-enthalpischen Übergang der Luftstrom erwärmt. Damit kann also im ersten Fall ein Kühleffekt und im zweiten Fall ein Heizeffekt erzielt werden.

Soll dagegen der Luftstrom während der Entfeuchtung durch hygroskopische Lösung gekühlt werden, so kann eine zusätzliche Kühlung des Wärmetauschers durch ein anderes Medium hilfreich sein. Auch dafür kann der erfindungsgemäße Mehrphasenwärmetauscher verwendet werden, wobei auf der Primärseite die zu entfeuchtende Luft gemeinsam mit einer die Wärmetauscherfläche benetzenden hygroskopischen Lösung im Gegenstrom eingeführt werden und auf der Sekundärseite das zu kühlende Medium, das je nach Erfordernis im Gleich- oder im Gegenstrom fließen kann und das gasförmig oder auch flüssig sein kann.

Der umgekehrte Fall, dass ein Luftstrom bei seiner Befeuchtung wärmer werden soll, ergibt sich zum Beispiel bei der Aufgabe der Regenerierung der hygroskopischen Lösung nachdem diese Wasser aufgenommen hat. Hier ist eine Erwärmung nötig, die ebenfalls im Mehrphasenwärmetauscher vorgenommen werden kann, wenn das Sekundärmedium Wärme zuführen kann.

Beide Aufgaben zusammen können gleichzeitig gelöst werden, wenn in dem beschriebenen Mehrphasen-Plattenwärmetauscher die Zuflüsse für Medien oder Flüssigkeiten oder einzelne Abschnitte des Wärmetauschers selbst mit gesonderten Temperierungsmedien oder einer elektrischen Heizung in Wärme leitendem Kontakt stehen, die diese Bereiche heizen oder kühlen können.

Die Einrichtung einer externen Temperierungsmöglichkeit und deren Platzbedarf unterstreichen die Wichtigkeit der oben genannten Aufgabe eine möglichst kompakten Bauweise für das ganze Gerät zu finden. Diese Aufgabe wird durch eine Kombination von einem Mehrphasenwärmetauscher mit zwei oder mehreren der Plattenwärmetauscher zu Heiz- oder Kühlzwecken gelöst, wobei diese Kombination aus einem einzigen Plattenpaket besteht und die einzelnen Teilwärmetauscher jeweils kongruente Bereiche auf den Platten dieses Pakets bilden.

Die Aufgabe, hygienische Bedingungen im Wärmetauscher zu garantieren und die Aufgabe die Luftfeuchtigkeit in den zu klimatisierenden Räumen durch eine hygroskopische Lösung zu begrenzen wird gemeinsam so gelöst, dass die Flüssigkeiten, mit denen die aktiven Oberflächen im Mehrphasen-Plattenwärmetauscher benetzt werden Wasser oder andere Lösungsmittel sowie hygroskopische Salze, Kältemittel, Desinfektionsmittel oder Netzmittel enthalten können. Die bereits genannte Beschichtung der Wärmeübertragungsflächen mit Ti02 Nano-Kristallen hat in diesem Zusammenhang einen zusätzlichen positiven Effekt. Durch die bekannten photo-katalytischen Eigenschaften des TiO2 werden bei Beleuchtung der Wärmetauscherflächen organische Materialien oder Mikroben, die normalerweise an der Oberfläche anhaften würden, chemisch zersetzt und deren Reste von der Flüssigkeit weggespült. Zu diesem Zweck muss man entweder die Mehrphasenwärmetauscher aus transparentem Kunststoff machen oder man muss für eine Beleuchtung sorgen, die in die Wärmetauscherplattenspalten hinein leuchtet.

Zusammenfassend wird die Aufgabe, Räume durch reine Verdampfungskühlung zu klimatisieren und dabei die Luftfeuchtigkeit in den zu klimatisierenden Räumen durch eine hygroskopische Lösung zu begrenzen so gelöst, dass in einem Mehrphasen-Plattenwärmetauscher das Primärmedium die heiße und feuchte Außenluft eines bewohnten Raumes ist und das Sekundärmedium die verbrauchte aber relativ trockene und kühle Luft des bewohnten Raumes ist, die im Gegenstrom zum Primärmedium fließt, und dass die inneren Oberflächen der Plattenspalten für das Primärmedium mit hygroskopischer Lösung benetzt werden, wobei diese Flüssigkeit und die Luft in gegensätzlicher Richtung fließen während die inneren Oberflächen der Plattenspalten für das Sekundärmedium mit Wasser benetzt werden, das in beliebiger Richtung fließen kann. Dadurch erhält man Frischluft mit annähernder Raumtemperatur aber wesentlich geringerer relativer Feuchte als die Raumfeuchte. Soll der Raum gekühlt werden, so schließt man an die so erreichte Trocknung der Frischluft eine iso-enthalpische Befeuchtung derselben mit Kühleffekt an, wodurch eine Temperatur erreicht werden kann, die deutlich unter dem Taupunkt der Raumluft liegt.

Die Aufgabe, einen Raum durch hygroskopische Lufttrocknung zu beheizen wird so gelöst, dass in einem Mehrphasen-Plattenwärmetauscher das Primärmedium die kalte Außenluft eines bewohnten Raumes ist und das Sekundärmedium die verbrauchte aber relativ feuchte und warme Luft des bewohnten Raumes ist, die im Gegenstrom zum Primärmedium fließt, und dass in diesem Fall die inneren Oberflächen der Plattenspalten für das Sekundärmedium mit hygroskopischer Lösung benetzt werden, wobei diese Flüssigkeit und die Luft in gegensätzlicher Richtung fließen während die inneren Oberflächen der Plattenspalten für das Primärmedium mit Wasser benetzt werden, das in beliebiger Richtung fließen kann. Dadurch erhält man Frischluft mit annähernder Raumtemperatur aber wesentlich größerer relativer Feuchte als die Raumfeuchte. Unterwirft man nun diese feuchte Frischluft einer iso-enthalpischen Trocknung bis zur gewünschten Raumfeuchte, erreicht man eine Temperatur deutlich über der herrschenden Raumtemperatur. Anzumerken ist, dass bei Außentemperaturen unter Null Grad für die Wasserdampfsättigung der Außenluft im Mehrphasenwärmetauscher für die Befeuchtung der aktiven Flächen ein geeigneter Frostschutz vor zu sehen ist. Hier kann im Tieftemperaturbereich statt reinen Wassers ein Frostschutzmittel mit niedrigem Eigendampfdruck zugegeben werden.

Die Nebenbedingung der Aufgabe Klimatisierung von Räumen durch Verdampfungskühlung, beziehungsweise eine Beheizung durch hygroskopische Lufttrocknung zu erreichen war die, diese Aufgabe für unterschiedliche Klimaverhältnisse der äußeren Umgebung zu lösen. Dies wird erfindungsgemäß dadurch erreicht, dass man mehrere der genannten Mehrphasenwärmetauscher zu einem System kombiniert. So kann es für die Kühlung in einem Raum mit trockener Luft sinnvoll sein die Abluft zuerst in einem Mehrphasenwärmetauscher für isoenthalpische Verdunstung zu befeuchten, bevor man den zuvor beschriebenen Kühlvorgang ausführt. Das gleiche gilt für die Beheizung eines relativ trockenen Raumes. Auch hier kann es sinnvoll sein die Abluft zuerst in einem Mehrphasenwärmetauscher für isoenthalpische Verdunstung zu befeuchten.

Umgekehrt ist es vorteilhaft, in einem feuchten tropischen Klima die Frischluft vor dem Eintritt in dem zuvor beschriebenen Kühlprozess in einem Mehrphasenwärmetauscher für isoenthalpische Trocknung vor zu trocknen.

Die Möglichkeit, ohne sichtbare Energiezufuhr einen Raum heizen oder kühlen zu können ist keineswegs ein Perpetuum Mobile. Eine hygroskopische Salzlösung ist nämlich ein hocheffizienter Energieträger. So kann zum Beispiel eine konzentrierte LiCl-Lösung die 10 bis 15-fache Wassermenge ihres Eigenvolumens aus feuchter Luft aufsaugen. Die resultierende Kondensationswärme die von einem Liter konzentrierter LiCl-Lösung frei gesetzt werden kann ist also etwa so groß ist wie die Wärmemenge die beim Verbrennen von einem Liter Heizöl entsteht. Dem zu Folge kann eine konzentrierte hygroskopische Lösung auch als Wärmespeicher dienen, der ohne Wärmedämmung eine potentielle Energie beliebig lange speichern kann.

Die Aufgabe einer Regenerierung der hygroskopischen Lösung durch ein gleichartiges Gerät, nachdem diese Lösung Wasser aufgenommen hat und dadurch verdünnt und unwirksam geworden ist, wird durch einen Mehrphasen-Plattenwärmetauscher gelöst, wo das Primärmedium heiße und feuchte Außenluft ist und wo die inneren Oberflächen der Plattenspalten für das Primärmedium mit vorgewärmter, verdünnter und wenig hygroskopischer Lösung im Gegenstrom zum Primärmedium benetzt werden, und wo das Sekundärmedium welches im Gegenstrom zum Primärmedium fließt die gleiche Luft ist, die nach dem Primärdurchgang durch den Wärmetauscher zusätzlich erwärmt und mit Dampf nahezu gesättigt worden ist, wodurch sich auf den inneren Oberflächen der Plattenspalten für das Sekundärmedium bei dessen Abkühlung Kondenswasser bildet, das im Gleichstrom mit dem Sekundärmedium abgekühlt den Wärmetauscher verlässt.

Da nicht auszuschließen ist, dass sich bei dem beschriebenen Trocknungsprozess zur Regeneration der hygroskopischen Lösung Salzkristalle bilden welche, wenn sie aus dem Wärmetauscher durch die Strömung abtransportiert werden, möglicherweise zu Verstopfungen des Systems führen könnten, ist es als zusätzliche Aufgabe wünschenswert, dass solche Kristalle am Ort ihrer Entstehung verbleiben, wo sie dann in der nächsten Kühlphase, vorausgesetzt, dass diese im gleichen Gerät stattfindet, wieder durch Kondenswasser aufgelöst werden. Dies kann erreicht werden, wenn der Mehrphasen-Plattenwärmetauscher so steht, dass seine Platten horizontal liegen und es Rillen oder Wellen quer zur Flussrichtung gibt, in denen sich diese Kristalle durch Schwerkraft ablagern.

### Aufzählung der Abbildungen und die Bedeutung der Nummern

Fig.1a bis 1d zeigen vier verschiedene Möglichkeiten der Nutzung eines Mehrphasen-Plattenwärmetauschers, nämlich:
Fig 1a zeigt eine schematische Darstellung eines einstufigen Kühlgerätes mit Mehrphasen-Plattenwärmetauscher und hygroskopischer Lufttrocknung
Fig.1b zeigt die Lösungsregeneration mit dem gleichen Gerät
Fig. 1c zeigt die isoenthalpische Luftbefeuchtung und Kühlung mittels eines Mehrphasen-Plattenwärmetauschers
Fig. 1d zeigt die isoenthalpische Lufttrocknung und Erwärmung mittels eines Mehrphasen-Plattenwärmetauschers
Fig 2a und 2b zeigen Schnitte quer durch die Platten mit der Führung von Primär- und Sekundärmedium sowie der die Platten benetzenden Flüssigkeitsschichten
Dabei zeigt Fig 2a einen Wärmetauscher mit vertikalen Platten und eine Flüssigkeitszuleitung durch Kapillaren und Fig 2b zeigt eine Flüssigkeitszuführung durch Verteilerkanäle quer durch horizontale Platten.
Fig. 3 zeigt das Schema einer dreistufigen Anordnung eines Kühlgerätes mit einem Mehrphasen-Plattenwärmetauscher und zwei isoenthalpischen Luftbefeuchtern
Fig. 4 zeigt das Schema einer dreistufigen Anordnung eines Heizgerätes mit einem Mehrphasen-Plattenwärmetauscher einem isoenthalpischen Luftbefeuchter und einem isoenthalpischen Lufttrockner
Fig.5 zeigt ein Schema, in dem die Dampfzuführung zur Lösungsregeneration von Fig. 1b durch einen Luftbefeuchter in Form eines Mehrphasen-Plattenwärmetauschers erreicht wird.

### Die Nummern in den Abbildungen bedeuten:

A...Umgebung
B...klimatisierter Raum
1...gasförmiges Primärmedium
1a... Plattenspalten für das Primärmedium
2...gasförmiges Sekundärmedium
2a...Plattenspalt für das Sekundärmedium
3...Flüssigkeit zur Benetzung der Innenwände der Primärmediumswärmetauscherspalten
4...Flüssigkeit zur Benetzung der Innenwände der Sekundärmediumswärmetauscherspalten
5...Kapillare zur Zuführung von Primärmediumsflüssigkeit
6...Rohr zur Wegführung von Primärmediumsflüssigkeit
7...Kapillare zur Zuführung von Sekundärmediumsflüssigkeit
8...Rohr zur Wegführung von Sekundärmediumsflüssigkeit
9...Verbindungskanal zur Zuführung von Flüssigkeit zum Primärmedium
9a...sehr kleine Öffnung im Verbindungskanal (9) oder am Ende einer Kapillare (5) mit Drosselwirkung
10...Verbindungskanal zur Zuführung von Flüssigkeit zum Sekundärmedium
10a...sehr kleine Öffnung im Verbindungskanal (10) oder am Ende einer Kapillare (7) mit Drosselwirkung
11... Lösungspumpe für die Primärseite
12... Lösungspumpe für die Sekundärseite
13...Wärmetauscherplatten
13a...aktive Fläche des Wärmetauschers,(= Trennwand zwischen Primärmedium und Sekundärmedium)
14... Mehrphasen-Plattenwärmetauscher
14a...Primärseite des Mehrphasen-Plattenwärmetauschers 14b...Sekundärseite des Mehrphasen-Plattenwärmetauschers
14c... Luftbefeuchter, in Form eines Mehrphasen-Plattenwärmetauschers
14d...Lufttrockner, in Form eines Mehrphasen-Plattenwärmetauschers
15... Frischluft in der Umgebung eines zu kühlenden Raumes
15a...erwärmte mit Dampf gesättigte Frischluft
16... Abluft aus einem klimatisierten Raum
17a...konzentrierte hygroskopische Lösung
17b...verdünnte hygroskopische Lösung
17c...erwärmte verdünnte hygroskopische Lösung
18...Wasser
19...kondensierendes Wasser
20...heißer Dampf

### Beschreibung der Abbildungen

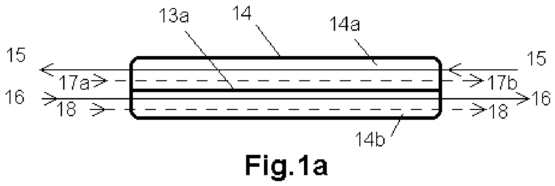

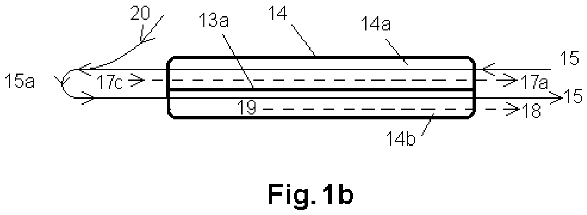

Fig.1a zeigt wie der erfindungsgemäße Mehrphasen-Plattenwärmetauscher für ein Lüftungssystem mit Kühlfunktion im warmen feuchten Klima verwendet wird. Der Mehrphasen-Plattenwärmetauscher -14-, der in der Realität üblicherweise aus vielen durch Platten gebildeten Kammern besteht, ist konzeptuell durch zwei aneinander anliegende Kammern -14a, 14b- dargestellt, die durch eine aktive Fläche -13a- voneinander getrennt sind, wobei die obere der beiden Kammern - 14a- die Wärmetauscherplattenspalten der Primärseite und die untere -14b- die Wärmetauscherplattenspalten der Sekundärseite symbolisiert. Dick gezeichnete Linien stellen den Wärmetauscher dar, dünne durchgezogene Linien stellen die Luftströme dar, gestrichelte Linien die benetzenden Flüssigkeiten. Auf der Primärseite -14a- kommt heiße feuchte Frischluft -15- im Wärmetauscher mit hygroskopischer Lösung -17a, 17b- in Kontakt. Dabei kondensiert Wasserdampf in der Lösung -17a- und die dabei entstehende Wärme wird durch die aktive Fläche - 13a- hindurch an die Sekundärseite -14b- des Wärmetauschers abgegeben. Die auf Raumlufttemperatur gekühlte und entfeuchtete Frischluft -15- wird in den zu kühlenden Raum geleitet. Die durch Wasserkondensation verdünnte hygroskopische Lösung -17b- verlässt den Wärmetauscher -14- und wird danach der Regenerierung zugeführt, die in Fig. 1b beschrieben wird. Auf der Sekundärseite -14b- wird kühle trockene Abluft -16- aus dem zu kühlenden Raum mit Wasser -18- in Kontakt gebracht, wobei gleichzeitig von der Primärseite -14a- her Wärme aus der Kondensation sowie Wärme aus der Abkühlung der Frischluft -15- für die Verdampfung eines Teils des Wassers -18- zur Verfügung stehen. Diese Wärme wird dadurch der Primärseite -14a- entzogen, weshalb in der Summe ein Kühleffekt bei der Frischluft auftritt. Das restliche Wasser -18- wird dabei nur leicht erwärmt und läuft zurück in einen Vorratstank.

Fig. 1b zeigt als weiteres Anwendungsbeispiel des Mehrphasen-Plattenwärmetauschers -14- die Regeneration der durch den Kühlprozess in Fig. 1a verdünnten und damit unbrauchbaren hygroskopischen Lösung -17b-. Es entspricht dies einer energetisch besonders günstigen Form der Entsalzung von Wasser, für die es ebenfalls eine große Zahl von Anwendungen gibt. Auf der Primärseite -14a- wird dabei Frischluft -15- mit erwärmter verdünnter hygroskopischen Lösung -17c- in Kontakt gebracht - wobei die Beheizung nicht dargestellt ist - deren Temperatur so hoch sein muss, dass ihr Dampfdruck über dem Dampfdruck der Frischluft -15-liegt. Dann nimmt die Frischluft -15- zusätzlichen Wasserdampf bis zu ihrer Sättigung auf. Da diese Frischluft -15- aber gleichzeitig gegen die erwärmte Lösung -17c- anströmt wird sie selbst wärmer und kann zusätzlichen Wasserdampf aufnehmen und wird schließlich zu einer heißen, fast mit Dampf gesättigten Luft - 15c-. Durch diesen Prozess kühlt sich die Lösung -17b- ab, während gleichzeitig ihre Konzentration steigt wodurch sie als konzentrierte kühle Lösung -17a- den Wärmetauscher -14- verlässt und erneut für einen Kühlvorgang verwendet werden kann. Die Sekundärseite -14b- dient der Energierückgewinnung der Kondensationswärme welche entsteht, weil die heiße, mit Dampf gesättigten Luft - 15c- auf die Sekundärseite des Wärmetauschers -14b- geleitet wird, wo ihr von der Primärseite -14a- her Wärme entzogen wird, wodurch sie abkühlt und der dabei entstehende überschüssige Dampf -19- and der aktiven Fläche -13a- zwischen Primärseite -14a- und der Sekundärseite -14b- kondensiert und damit die Kondensationswärme für die Lösungswasserverdampfung auf der Primärseite -14a-zur Verfügung stellt. In der Regel wird aber der Dampfgehalt der befeuchteten Frischluft -15- nach dem Verlassen der Primärseite -14a- nicht ausreichen um den beschriebenen Energierückführungsprozess dauerhaft aufrecht zu erhalten. Es muss der Luft -15-daher eine kleine Menge heißer Dampf -20- an der Stelle zugeführt werden, wo sie von der Primärseite -14a- zur Sekundärseite -14b- wechselt.

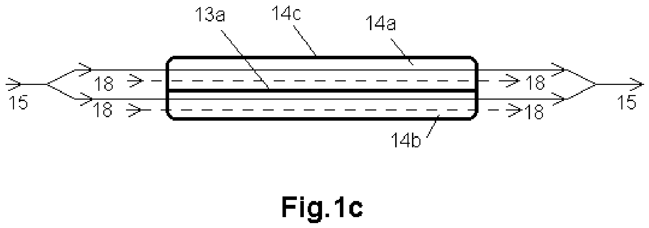

Fig. 1c zeigt die isoenthalpische Befeuchtung und Kühlung von Frischluft -15-mittels eines Luftbefeuchters-14c-, in Form eines Mehrphasen-Plattenwärmetauschers -14-. Die zuströmende Frischluft -15- wird zuerst in 2 Ströme geteilt, die parallel zueinander in die Primärseite -14a- und Sekundärseite - 14b- eines Luftbefeuchters-14c-, in Form eines Mehrphasen-Plattenwärmetauschers -14- geleitet werden, wo sie mit Wasser -18-, das die aktiven Flächen -13a- benetzt und sich in beliebiger Richtung bewegen darf, in Kontakt gebracht wird. Dabei verdampft Wasser -18-, sättigt dadurch allmählich die Frischluft -15- mit Feuchtigkeit und kühlt sie dabei ab.

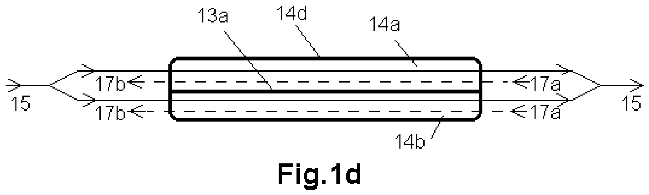

Fig. 1d zeigt die isoenthalpische Trocknung und Erwärmung von Frischluft -15-mittels eines Lufttrockners -14d-, in Form eines Mehrphasen-Plattenwärmetauschers -14-. Die zuströmende Frischluft -15- wird zuerst in 2 Ströme geteilt, die parallel zueinander in die Primärseite -14a- und Sekundärseite - 14b- eines Lufttrockners -14d-, in Form eines Mehrphasen-Plattenwärmetauschers - 14- geleitet werden, wo sie mit hygroskopischer Lösung -17a, 17b- welche die aktiven Flächen -13a- benetzt und sich vorteilhafterweise im Gegenstrom zur Frischluft -15- bewegen soll, in Kontakt gebracht wird. Dabei kondensiert Wasserdampf aus der feuchten Frischluft -15- in der hygroskopischer Lösung -17a, 17b- und trocknet dadurch allmählich die Frischluft -15- und erwärmt sie dabei.

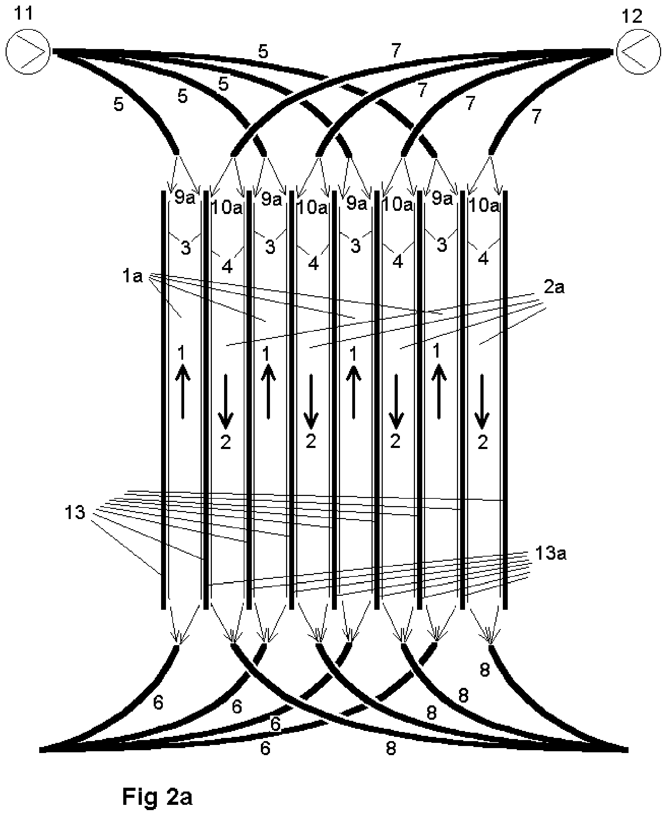

Fig. 2a zeigt einen schematischen Schnitt quer durch die Platten eines Mehrphasen-Plattenwärmetauschers mit Flüssigkeitszuleitung durch die Pumpen -11, 12- und die als Drosseln wirkenden Kapillaren -5,7- in einem Fall, wo der Flüssigkeitsweg hauptsächlich durch Schwerkraft bestimmt wird, einer Situation also, wo sich vertikal gestellte Platten empfehlen, da so in jedem Wärmetauscherplattenspalt - 1a,1b- beide angrenzenden Oberflächen problemlos mit Flüssigkeiten -3,4- benetzt werden können , wobei die Führung von Primär- -1- und Sekundärmedium -2-sowie der die Platten -13- benetzenden Flüssigkeitsschichten -3,4- eingezeichnet ist. Außerdem erkennt man ein den Kapillaren -5,7- ähnlich gestaltetes Rohrsystem -6,8- zur Ableitung der Restflüssigkeit. Diese Restflüssigkeit, sei es Wasser -18- oder verdünnte hygroskopische Lösung -17b- kann entweder durch Schwerkraft zu einem Speichertank oder durch eine Pumpe zu weiteren Systemaufgaben bewegt werden. Anzumerken ist, dass diese Flüssigkeitszuleitung und Ableitung nicht nur für senkrecht stehende Wärmetauscherplatten, sondern auch für Platten mit beliebiger Neigung funktioniert, wenn die Plattenoberflächen so gestaltet oder beschichtet sind, dass ihre Benetzung mit Flüssigkeit immer garantiert ist. Das gelingt insbesondere dann gut, wenn die Plattenoberflächen aus feinporigem oder feinfaserigem Material bestehen.

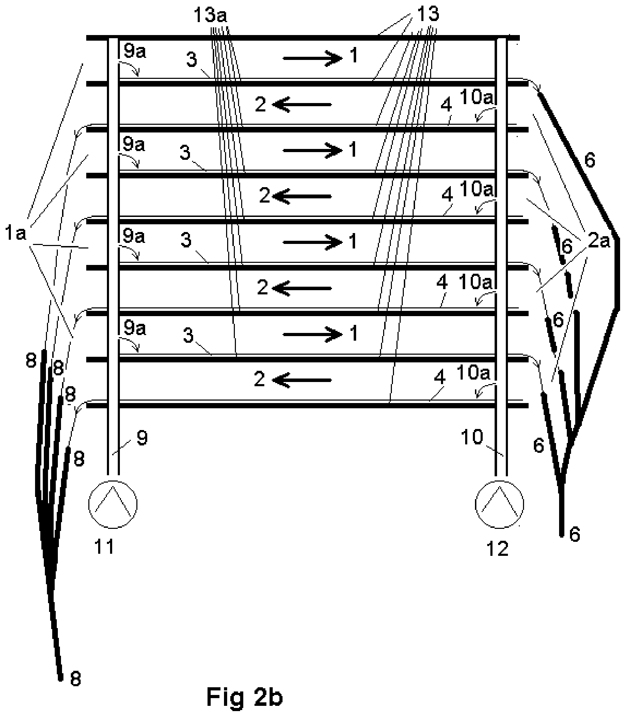

Fig. 2b zeigt einen schematischen Schnitt quer durch die Platten eines horizontalen Mehrphasen-Plattenwärmetauschers mit Flüssigkeitszuleitung durch die Pumpen - 11, 12- und Verbindungskanälen -9, 10- quer durch die Wärmetauscherplatten -13-wobei an den Durchbrüchen durch die Spalten des jeweils korrespondierenden Mediums -1,2- jeweils kleine Öffnungen -9a, 10a- mit Drosselfunktion eine tropfenweise Versorgung der Flüssigkeitsschichten -3, 4- ermöglichen. Auch hier wurde ein Rohrsystem -6,8- zur Ableitung der Restflüssigkeit in der Zeichnung dargestellt. Freilich wäre auch eine Flüssigkeitsableitung analog zur hier gezeigten Flüssigkeitszuleitung durch die Verbindungskanäle -9, 10- quer durch die Wärmetauscherplatten -13- zielführend. Diese Restflüssigkeit, sei es Wasser -18- oder verdünnte hygroskopische Lösung -17b- kann entweder durch Schwerkraft zu einem Speichertank oder durch eine Pumpe zu weiteren Systemaufgaben bewegt werden. Auch diese Art der Flüssigkeitszuleitung und Ableitung kann für Platten mit beliebiger Neigung funktionieren, wenn die Benetzung mit Flüssigkeit immer garantiert ist.

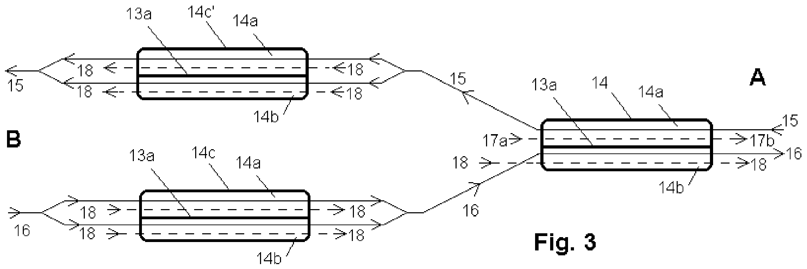

Fig. 3 zeigt das Schema eines dreistufigen Kühlsystems zwischen der heißen äußeren Umgebungsluft -A- und der Luft in dem zu kühlenden Raum -B-, bestehend aus einem Mehrphasen-Plattenwärmetauscher -14- und zwei isoenthalpischen Luftbefeuchtern -14c- und -14c', welche eine Bauweise wie die in Fig. 1c gezeigte haben. Die von der Umgebung -A- kommende Frischluft -15- wird in der Primärseite -14a- im Mehrphasen-Plattenwärmetauscher -14- durch die die aktive Fläche -13a-benetzende hygroskopischen Lösung -17a, 17b-, die sich in der Gegenrichtung zur Luft -15- bewegt, entfeuchtet. Die dabei entstehende Wärme wird durch die aktive Fläche -13a- des Mehrphasen-Plattenwärmetauscher -14- auf die Sekundärseite - 14b- geleitet, wo Abluft -16- aus dem zu kühlenden Raum -B- in Richtung zur äußeren Umgebung -A- strömt. Da die aktive Fläche -13a- auf der Sekundärseite - 14b- mit Wasser -18- benetzt wird, das im Überschuss angeboten wird, wird auf der Sekundärseite -14b- genau so viel Wasser -18- in die Abluft -16- verdampft, wie dem Wärmeangebot von der Primärseite -14a- her entspricht. Diese in den Mehrphasen-Plattenwärmetauscher -14- einströmende Abluft -16- ist bereits kälter und feuchter als die Luft im klimatisierten Raum -B-, da sie bereits den isoenthalpischen Luftbefeuchter -14c- passiert hat, wo sie durch die Aufnahme von Wasser -18- bis zum Taupunkt des klimatisierten Raums -B- abgekühlt hat und mit Feuchtigkeit gesättigt ist. Dessen ungeachtet kann diese gesättigte Abluft -16- im Mehrphasen-Plattenwärmetauscher -14- weiter Wasserdampf aufnehmen, da sie ja durch Aufnahme der aus dem Prozess der Frischluftentfeuchtung entstehenden Wärme selbst erwärmt wird. Andererseits erlaubt die Tatsache, dass Abluft -16- mit der Temperatur des Taupunkts des klimatisierten Raums -B- in den Mehrphasen-Plattenwärmetauscher -14- einströmt, dass auch die nun getrocknete Frischluft - 15- beim Verlassen des Mehrphasen-Plattenwärmetauscher -14- eine Temperatur in der Nähe dieses Taupunktes hat. Diese kalte trockene Frischluft -15- wird nun zum isoenthalpischen Luftbefeuchter -14c'- geleitet, wo sie durch erneute Befeuchtung mit Wasser -18- auf eine Temperatur gebracht wird, die deutlich unter dem Taupunkt dieses klimatisierten Raums -B- liegt.

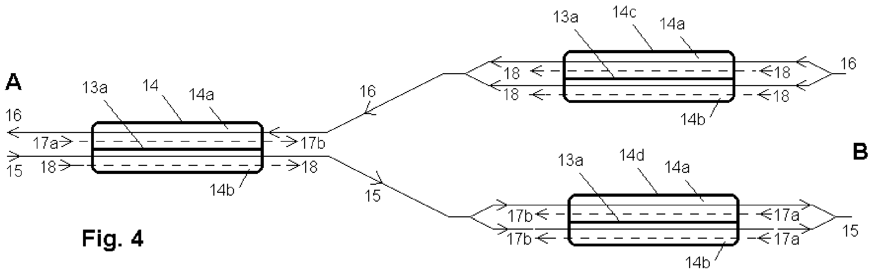

Fig. 4 zeigt das Schema eines dreistufigen Heizsystems zwischen der äußeren kalten Umgebungsluft -A- und der Luft in dem zu heizenden Raum -B-, bestehend aus einem Mehrphasen-Plattenwärmetauscher -14- einem isoenthalpischen Luftbefeuchter -14c- und einem isoenthalpischen Lufttrockner -14d-, welche Bauweisen wie die in Fig. 1c und Fig. 1d gezeigten haben. Die von -A- kommende Frischluft -15- wird in der Primärseite -14a- im Mehrphasen-Plattenwärmetauscher -14- durch das die aktive Fläche -13a- benetzende Wasser -18-, das im Überschuss angeboten wird, befeuchtet. Die dafür benötigte Wärme wird durch die aktive Fläche -13a- des Mehrphasen-Plattenwärmetauscher -14- von der Sekundärseite - 14b- bezogen, wo Abluft -16- aus dem zu heizenden Raum -B- in Richtung zur äußeren Umgebung -A- strömt. Da die aktive Fläche -13a- auf der Sekundärseite - 14b- mit hygroskopischer Lösung -17a, 17b- die sich in der Gegenrichtung zur Abluft -16- bewegt, benetzt wird, wird auf der Primärseite -14a- genau so viel Wasser -18-in die Frischluft -15- verdampft, wie dem Wärmeangebot von der Sekundärseite - 14b- her entspricht. Diese in den Mehrphasen-Plattenwärmetauscher -14-einströmende Abluft -16- ist bereits etwas kälter und feuchter als die Luft im klimatisierten Raum -B-, da sie bereits den isoenthalpischen Luftbefeuchter -14c-passiert hat, wo sie durch die Aufnahme von Wasser -18- bis zu einem Optimalwert befeuchtet worden ist, der aus den Enthalpiedaten feuchter Luft für jeden Einzelfall berechnet werden kann. In der Praxis empfiehlt sich hier eine automatische Steuerung durch einen programmierbaren Chip in Kombination mit entsprechenden Temperatur und Feuchtesensoren sowie Strömungsmessern. Die Steuerung funktioniert in diesem Fall über die Menge des zugeführten Wassers -18-im Verhältnis zum Luftstrom -16-. Der Vorteil dieser Befeuchtung im isoenthalpischen Luftbefeuchter -14c- liegt darin, dass danach genug Wasserdampf zur Verfügung steht, um durch seine anschließende Kondensation in hygroskopischer Lösung -17a,17b- im Mehrphasen-Plattenwärmetauscher -14- die komplette Befeuchtung der Frischluft -15- zu ermöglichen. Danach verlässt also die Frischluft -15- den Mehrphasen-Plattenwärmetauscher -14- mit Dampf gesättigt und mit einer Temperatur, die nicht weit unter der liegt, die im Raum -B- herrscht und wird zum isoenthalpischen Lufttrockner -14d- geleitet, wo sie durch die hygroskopische Lösung -17a, 17b- unter gleichzeitiger Erwärmung getrocknet wird und danach zur Erwärmung des klimatisierten Raums -B- verwendet werden kann.

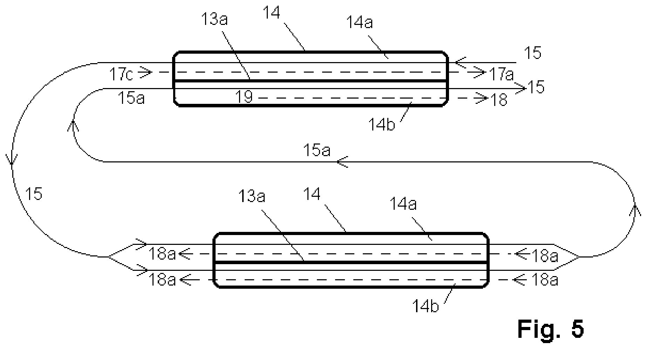

Fig.5 zeigt ein Schema, in dem die Dampfzuführung zur Lösungsregeneration von Fig. 1b durch einen Luftbefeuchter -14c- der anolog zur Fig. 1c aufgebaut ist, erreicht wird, wobei allerdings auf die Isoenthalpie verzichtet wird, weil heißes Wasser zugeführt wird. Dampferzeuger gibt es nach dem Stand der Technik viele.

Allerdings erweist sich ein Luftbefeuchter -14c- nach Art des hier beschriebenen Mehrphasen-Plattenwärmetauschers -14- für die Aufgabe der Regenerierung von hygroskopischer Lösung als besonders effektiv, da er nur genau die Dampfmenge konsumiert, die für den Prozess abzüglich der wieder verwertbaren Kondensationswärme gebraucht wird. Die Trocknung der die aktive Fläche -13a-benetzenden hygroskopischen Lösung -17c,17a- wird auf der Primärseite -14a- des Mehrphasen-Plattenwärmetauschers -14- dadurch ermöglicht, dass auf dessen Sekundärseite -14b- kondensierender Wasserdampf -19- die nötige Prozesswärme liefert. Da die einzudampfende heiße hygroskopische Lösung -17c- einen Dampfdruck hat, der unter dem Dampfdruck einer gesättigten Frischluft -15- der gleichen Temperatur liegt, kann diese Frischluft -15- im Mehrphasen-Plattenwärmetauscher -14- nicht bis zu einer Feuchtigkeit von 100% gebracht werden, die zur Kondensation bei dieser Temperatur nötig wäre. Daher leitet man diese aus Primärseite -14a- des Mehrphasen-Plattenwärmetauschers -14-kommende heiße und sehr feuchte Frischluft -15- zu einem Luftbefeuchter -14c-, wo sie mit heißem Wasser -18a- im Gegenstrom in Kontakt gebracht wird. Dabei wird die Frischluft -15- weiter erwärmt und mit Dampf gesättigt. Sobald sie danach zurück in den Mehrphasen-Plattenwärmetauscher -14- auf dessen Sekundärseite - 14b- geleitet wird, kondensiert gerade so viel Wasserdampf, wie für die Aufrechterhaltung des Trocknungsprozesses auf der Primärseite -14a- des Mehrphasen-Plattenwärmetauschers -14- nötig ist. Für eine Optimierung des Gesamtprozesses ist es nötig, die Temperatur des heißen Wassers -18a- im Luftbefeuchter -14c- so zu wählen, dass die Temperatur der den Mehrphasen-Plattenwärmetauscher -14- verlassenden Frischluft -15- möglichst nahe der Temperatur liegt, die sie vor dem ganzen Prozess hatte.

## Patentansprüche

1. Mehrphasen-Plattenwärmetauscher (14) für 2 oder mehr gasförmige Medien (1,2), wobei der Mehrphasen-Plattenwärmetauscher (14) mehrere durch Wärmetauscherplatten (13) gebildete Kammern (14a, 14b) umfasst, welche durch aktive Flächen (13a) voneinander getrennt sind, wobei die aktiven Flächen (13a) ausgebildet sind zur Wärmeübertragung zwischen den betroffenen Medien (1,2) auf einer oder auf beiden Oberflächen von einer oder von zwei verschiedenen langsam fließenden Flüssigkeiten (3,4) benetzt zu werden, damit diese mit den jeweiligen Medien (1,2) in direkter Wechselwirkung stehen, so dass Verdampfung oder Kondensation und wegen der dabei eintretenden Konzentrationsänderungen in den Flüssigkeiten auch Kristallisation oder Lösung von Kristallen stattfinden kann, wobei Pumpen (11,12) vorgesehen sind, um diese Flüssigkeiten (3,4) von außen zu ihren spezifischen Eingangspositionen (9a, 10a) zwischen den Wärmetauscherplatten (13) zu pumpen, damit sich diese von dort als benetzender Flüssigkeitsfilm entlang der aktiven Flächen (13a) durch den Plattenwärmetauscher (14) bewegen können, wobei zusammengehörige Medien (1,2) und Flüssigkeiten (3,4) parallel oder im Gegenstrom zueinander fließen können, **dadurch gekennzeichnet, dass** die Flüssigkeitszufuhr von einem Speichertank zu den kleinen Öffnungen (9a, 10a), die als Eingangspositionen zwischen den Wärmetauscherplatten (13) dienen, so erfolgt, dass sich die Zuleitung nach der Pumpe (11,12) zu einem Bündel von Kapillaren (5,7) in Rohr- oder Schlauchform auffächert die an den entsprechenden kleinen Öffnungen (9a, 10a) im Wärmetauscher münden, und dass in jedem Wärmetauscherplattenspalt (1a, 1b) beide angrenzenden Oberflächen mit den Flüssigkeiten (3,4) benetzt werden können.

2. Mehrphasen-Plattenwärmetauscher (14) nach Anspruch 1, **dadurch gekennzeichnet, dass** die Zuflüsse für Medien (1,2) oder Flüssigkeiten (3,4) oder einzelne Abschnitte des Wärmetauschers (14) selbst mit gesonderten Temperierungsmedien oder einer elektrischen Heizung in Wärme leitendem Kontakt stehen, die diese Bereiche heizen oder kühlen können.

3. Mehrphasen-Plattenwärmetauscher (14) nach einem der obigen Ansprüche, **dadurch gekennzeichnet, dass** die Oberflächen (3,4) der aktiven Flächen (13a) zur Wärmeübertragung die gleichmäßige Verteilung des Flüssigkeitsfilms (3,4) beziehungsweise die lokale Festhaltung von Kristallen oder deren Weitertransport mechanisch durch Rillen, feinporöse Oberfläche, Schleifspuren, Kratzer und/oder Faserbeschichtung, sowie durch hydrophile Materialien und Beschichtungen oder aber auch durch eine Kombination mehrerer solcher Maßnahmen ermöglichen.

4. Kombination von mehreren der Mehrphasen-Plattenwärmetauscher nach einem der obigen Ansprüche, **dadurch gekennzeichnet, dass** diese Kombination aus einem einzigen Plattenpaket besteht und die einzelnen Teilwärmetauscher jeweils kongruente Bereiche auf den Platten dieses Pakets bilden.

5. Verfahren zum Betreiben eines Mehrphasen-Plattenwärmetauschers (14) nach Anspruch 1 mit 2 oder mehr gasförmige Medien (1,2), die im Gegenstrom oder Parallelstrom von einem oder von mehr regulierbaren Gebläsen bewegt werden, mit unterschiedlicher Temperaturen und mit unterschiedlichem Dampfgehalt, wobei die aktiven Flächen (13a) zur Wärmeübertragung zwischen den betroffenen Medien (1,2) auf einer oder auf beiden Oberflächen von einer oder von zwei verschiedenen langsam fließenden Flüssigkeiten (3,4) benetzt werden, die mit den jeweiligen Medien (1,2) in direkter Wechselwirkung stehen, so dass Verdampfung oder Kondensation und wegen der dabei eintretenden Konzentrationsänderungen in den Flüssigkeiten auch Kristallisation oder Lösung von Kristallen stattfinden kann, wobei diese Flüssigkeiten (3,4) von außen zu ihren spezifischen Eingangspositionen (9a, 10a) zwischen den Wärmetauscherplatten (13) gepumpt werden und sich von dort als benetzender Flüssigkeitsfilm entlang der aktiven Flächen (13a) durch den Plattenwärmetauscher (14) bewegen, wobei zusammengehörige Medien (1,2) und Flüssigkeiten (3,4) parallel oder im Gegenstrom zueinander fließen können, **dadurch gekennzeichnet, dass** die Flüssigkeitszufuhr von einem Speichertank zu den kleinen Öffnungen (9a, 10a), die als Eingangspositionen zwischen den Wärmetauscherplatten (13) dienen, so erfolgt, dass sich die Zuleitung nach der Pumpe (11,12) zu einem Bündel von Kapillaren (5,7) in Rohr- oder Schlauchform auffächert die an den entsprechenden kleinen Öffnungen (9a, 10a) im Wärmetauscher münden, und dass in jedem Wärmetauscherplattenspalt (1a, 1b) beide angrenzenden Oberflächen mit den Flüssigkeiten (3,4) benetzt werden.

6. Verfahren nach Anspruch 5, **dadurch gekennzeichnet, dass** die genannten Flüssigkeiten (3,4) Wasser oder andere Lösungsmittel sowie hygroskopische Salze, Kältemittel, Desinfektionsmittel oder Netzmittel enthalten können.

7. Verfahren nach Anspruch 5 oder 6, **dadurch gekennzeichnet, dass** das Primärmedium (1) die heiße und feuchte Frischluft (15) der Umgebung eines zu kühlenden Raumes ist und das Sekundärmedium (2) die verbrauchte trockene und kühle Abluft (16)dieses gekühlten Raumes ist, die im Gegenstrom zum Primärmedium (1) fließt, und dass die inneren Oberflächen der Plattenspalten (1a) für das Primärmedium mit hygroskopischer Lösung (17a) benetzt werden, wobei Flüssigkeit (3) und Primärmedium (1)in gegensätzlicher Richtung fließen während die inneren Oberflächen der Plattenspalten (2a) für das Sekundärmedium (2) mit Wasser (18) benetzt werden, das in beliebiger Richtung fließen kann.

8. Verfahren nach einem der Ansprüche 5 bis 7, welches der Regeneration von verdünnter hygroskopischer Lösung dient, **dadurch gekennzeichnet, dass** das Primärmedium (1) die heiße und feuchte Frischluft (15) der Umgebung eines zu kühlenden Raumes ist und dass die inneren Oberflächen der Plattenspalten (1a) für das Primärmedium (1) mit nach Anspruch 2 zusätzlich vorgewärmter verdünnter hygroskopischer Lösung (17c)im Gegenstrom zum Primärmedium (1) benetzt werden, und dass das Sekundärmedium (2) welches im Gegenstrom zum Primärmedium (1) fließt die gleiche aber erwärmte Frischluft (15c) ist, die nach dem Primärdurchgang durch den Mehrphasen-Wärmetauscher (14) erwärmt und mit zusätzlichem Dampf (20)nahezu gesättigt ist, und dass sich auf den inneren Oberflächen der Plattenspalten (2a) für das Sekundärmedium (2) bei dessen Abkühlung Kondenswasser bildet, das im Gleichstrom mit dem Sekundärmedium (2)abgekühlt den Mehrphasen-Wärmetauscher (14) verlässt.

9. Verfahren nach einem der Ansprüche 5 bis 8 mit einer Kombination von 2 Mehrphasen-Plattenwärmetauschern, **dadurch gekennzeichnet, dass** Abluft(16)eines zu kühlenden Raumes (B) in einem ersten als Luftbefeuchter (14c) dienenden Mehrphasen-Plattenwärmetauschers (14) isoenthalpisch bis zu ihrem Taupunkt befeuchtet und abgekühlt wird und danach in einem zweiten Mehrphasen-Plattenwärmetauschers (14) einerseits durch Wasser (18) befeuchtet und erwärmt wird und andererseits im Gegenstrom zu einer aus der Umgebung (A) kommenden heißen feuchten Frischluft (15)geführt wird, welche dabei gleichzeitig durch eine hygroskopische Lösung (17a,17b)getrocknet und bis nahe an den Taupunkt des zu kühlenden Raumes (B) abgekühlt wird.

10. Verfahren nach Anspruch 9 mit einem dritten Mehrphasen-Plattenwärmetauscher nach einem der Ansprüche von 1 bis 4, **dadurch gekennzeichnet, dass** die aus dem zweiten Mehrphasen-Plattenwärmetauschers (14) kommende, getrocknete und bis nahe an den Taupunkt des zu kühlenden Raumes (B) abgekühlte Frischluft (15) in dem dritten als Luftbefeuchter (14c) dienenden Mehrphasen-Plattenwärmetauschers (14) isoenthalpisch noch weiter abgekühlt wird.

11. Verfahren nach einem der Ansprüche 9 oder 10 mit einem als Lufttrockner (14d) dienenden Mehrphasen-Plattenwärmetauscher (14) nach einem der Ansprüche von 1 bis 4, **dadurch gekennzeichnet, dass** die warme feuchte Frischluft (15) aus der Umgebung (A) zuerst in einem als Lufttrockner (14d) dienenden Mehrphasen-Plattenwärmetauscher (14) unter isoenthalpischer Erwärmung mittels hygroskopischer Lösung (17a, 17b) vorgetrocknet wird, bevor sie im eigentlichen Mehrphasen-Plattenwärmetauscher (14) im Gegenstrom zur Abluft (16) gekühlt und mit hygroskopischer Lösung (17a, 17b) weiter getrocknet wird.

12. Verfahren nach einem der Ansprüche 5 bis 8 mit einer Kombination von 3 Mehrphasen-Plattenwärmetauschern nach einem der Ansprüche von 1 bis 4, **dadurch gekennzeichnet, dass** Abluft (16) eines zu erwärmenden Raumes (B) in einem ersten als Luftbefeuchter (14c) dienenden Mehrphasen-Plattenwärmetauschers (14) isoenthalpisch befeuchtet und danach in einem zweiten Mehrphasen-Plattenwärmetauschers (14) einerseits mit hygroskopischer Lösung (17a, 17b) getrocknet wird und andererseits im Gegenstrom zu einer aus der Umgebung (A) kommenden kalten Frischluft (15) geführt wird, welche dabei gleichzeitig durch Wasser (18) befeuchtet und durch die Trocknung der Abluft (16) erwärmt wird und wo diese befeuchtete und leicht erwärmte Frischluft in einem dritten als Lufttrockner (14d) dienenden Mehrphasen-Plattenwärmetauscher (14)isoenthalpisch getrocknet und erwärmt wird und von dort der Erwärmung des Raums -B- zugeführt wird.

13. Verfahren nach einem der Ansprüche 5 bis 8 mit einer Kombination von 2 Mehrphasen-Plattenwärmetauschern nach einem der Ansprüche von 1 bis 4 welche der Regeneration von verdünnter hygroskopischer Lösung (17b) dient, um sie durch Wasserentzug wieder in konzentrierte hygroskopischer Lösung (17a) zu verwandeln, **dadurch gekennzeichnet, dass** Frischluft (15) in die Primärseite (14a) eines ersten Mehrphasen-Plattenwärmetauschers (14) geführt wird, wo sie im Gegenstrom zu erwärmter verdünnter hygroskopischer Lösung (17c) welche die aktive Fläche (13a) dieses Mehrphasen-Plattenwärmetauschers (14) benetzt strömt und nachdem sie sich dabei erwärmt und mit Feuchtigkeit beinahe gesättigt hat in einen zweiten, als Luftbefeuchter (14c) dienenden Mehrphasen-Plattenwärmetauscher (14) gelangt, wo die aktive Fläche (13a) mit heißem Wasser benetzt ist sodass sich die Frischluft (15) weiter erwärmt und befeuchtet, und wo diese Frischluft (15) danach erneut zum ersten Mehrphasen-Plattenwärmetauschers (14) aber zu dessen Sekundärseite (14b) geleitet wird, wo sie sich wieder abkühlt und den überschüssigen Dampf an der aktiven Fläche (13a) dieses ersten Mehrphasen-Plattenwärmetauschers (14) kondensiert, wodurch die für den Wasserentzug aus der verdünnten hygroskopischer Lösung (17b) benötigte Wärme bereit gestellt wird.

## Claims

1. Multiphase plate heat exchanger (14) for two or more gaseous media (1,2), wherein the multiphase plate heat exchanger (14) comprises a plurality of chambers (14a, 14b) formed by heat exchanger plates (13) separated from each other by active surfaces (13a), wherein the active surfaces (13a) are adapted for heat transfer between the affected media (1, 2) on one or both surfaces of one or two different slow-flowing liquids (3, 4), so that they interact directly with the respective media (1, 2), so that evaporation or condensation and also crystallization or solution of crystals can take place due to the concentration changes in the liquids occurring thereby, wherein pumps (11, 12) are provided in order to transfer these liquids (3, 4) from the outside to their specific input positions (9a, 10a) between the heat exchanger plates (13) so that they can move from there as a wetting liquid film along the active surfaces (13a) through the plate heat exchanger (14), wherein associated media (1, 2) and liquids (3, 4) can flow in parallel or countercurrent to each other, **characterized in that** the liquid supply from a storage tank to the small openings (9a, 10a), which serve as input positions between the heat exchanger plates (13), is effected in such a way that the supply line after the pump (11, 12) fans out into a bundle of capillaries (5, 7) in tubular or hose form which open out at the corresponding small openings (9a, 10a) in the heat exchanger, and **in that** in each heat exchanger plate gap (1a, 1b) both adjacent surfaces can be wetted with the liquids (3, 4).

2. Multiphase plate heat exchanger (14) according to claim 1, **characterized in that** the inflows for media (1, 2) or liquids (3, 4) or individual sections of the heat exchanger (14) itself are in heat-conducting contact with separate tempering media or an electric heater which can heat or cool these regions.

3. Multiphase plate heat exchanger (14) according to one of the preceding claims, **characterized in that** the surfaces (3, 4) of the active surfaces (13a) for heat transfer permit the uniform distribution of the liquid film (3, 4) or the local retention of crystals or their further transport mechanically by grooves, finely porous surfaces, grinding marks, scratches and/or fiber coating, as well as by hydrophilic materials and coatings or also by a combination of several such measures.

4. Combination of several of the multiphase plate heat exchangers according to one of the preceding claims, **characterized in that** said combination consists of a single plate pack and the individual partial heat exchangers each form congruent regions on the plates of said pack.

5. Method for operating a multiphase plate heat exchanger (14) according to claim 1, comprising two or more gaseous media (1,2) moved in countercurrent or parallel flow by one or more controllable blowers, at different temperatures and with different vapor content, wherein the active surfaces (13a) for heat transfer between the media concerned (1, 2) are wetted on one or on both surfaces by one or two different slow-flowing liquids (3, 4) which are in direct interaction with the respective media (1, 2), so that evaporation or condensation and, due to the concentration changes in the liquids occurring thereby, crystallization or solution of crystals can also take place, wherein these liquids (3, 4) are pumped from the outside to their specific input positions (9a, 10a) between the heat exchanger plates (13) and from there move as a wetting liquid film along the active surfaces (13a) through the plate heat exchanger (14), wherein associated media (1, 2) and liquids (3, 4) can flow in parallel or countercurrent to each other, **characterized in that** the liquid supply from a storage tank to the small openings (9a, 10a), which serve as input positions between the heat exchanger plates (13), is effected in such a way that the supply line after the pump (11, 12) fans out into a bundle of capillaries (5, 7) in tubular or hose form which open out at the corresponding small openings (9a, 10a) in the heat exchanger, and **in that** in each heat exchanger plate gap (1a, 1b) both adjacent surfaces are wetted with the liquids (3, 4).

6. Method according to claim 5, **characterized in that** the said liquids (3, 4) may contain water or other solvents as well as hygroscopic salts, refrigerants, disinfectants or wetting agents.

7. Method according to claim 5 or 6, **characterized in that** the primary medium (1) is the hot and humid fresh air (15) of the ambient environment of a room to be cooled and the secondary medium (2) is the used dry and cool exhaust air (16) of this cooled room, which flows in countercurrent to the primary medium (1), and **in that** the inner surfaces of the plate gaps (1a) for the primary medium are wetted with hygroscopic solution (17a), wherein the liquid (3) and primary medium (1) flow in opposite directions, while the inner surfaces of the plate gaps (2a) for the secondary medium (2) are wetted with water (18) which can flow in any direction.

8. Method according to one of claims 5 to 7, which serves to regenerate diluted hygroscopic solution, **characterized in that** the primary medium (1) is the hot and moist fresh air (15) of the ambient environment of a room to be cooled and **in that** the inner surfaces of the plate gaps (1a) for the primary medium (1) are wetted with additionally preheated diluted hygroscopic solution (17c) according to claim 2 in countercurrent to the primary medium (1), and **in that** the secondary medium (2) which flows in countercurrent to the primary medium (1) is the same but heated fresh air (15c) which is heated after the primary passage through the multiphase heat exchanger (14) and is virtually saturated with additional steam (20), and **in that** condensation forms on the inner surfaces of the plate gaps (2a) for the secondary medium (2) during the cooling thereof, which condensation leaves the multiphase heat exchanger (14) cooled in direct flow with the secondary medium (2).

9. Method according to one of claims 5 to 8, comprising a combination of two multiphase plate heat exchangers, **characterized in that** exhaust air (16) from a room (B) to be cooled is isoenthalpically humidified and cooled to its dew point in a first multiphase plate heat exchanger (14) serving as an air humidifier (14c), and is then humidified and heated on the one hand by water (18) in a second multiphase plate heat exchanger (14), and on the other hand is conducted in countercurrent to hot moist fresh air (15) coming from the ambient environment (A), which is simultaneously dried by a hygroscopic solution (17a, 17b) and cooled to close to the dew point of the room (B) to be cooled.

10. Method according to claim 9, comprising a third multiphase plate heat exchanger according to one of the claims from 1 to 4, **characterized in that** the dried fresh air (15) coming from the second multiphase plate heat exchanger (14) and cooled to close to the dew point of the room (B) to be cooled is further isoenthalpically cooled in the third multiphase plate heat exchanger (14) serving as air humidifier (14c).

11. Method according to one of claims 9 or 10, comprising a multiphase plate heat exchanger (14) serving as an air dryer (14d) according to one of claims 1 to 4, **characterized in that** the warm moist fresh air (15) from the ambient environment (A) is first pre-dried in a multiphase plate heat exchanger (14) serving as an air dryer (14d) under isoenthalpic heating by means of hygroscopic solution (17a, 17b) before it is cooled in the actual multiphase plate heat exchanger (14) in countercurrent to the exhaust air (16) and further dried with hygroscopic solution (17a, 17b).

12. Method according to one of claims 5 to 8, comprising a combination of three multiphase plate heat exchangers according to one of claims 1 to 4, **characterized in that** exhaust air (16) of a room (B) to be heated is isoenthalpically humidified in a first multiphase plate heat exchanger (14) serving as an air humidifier (14c) and then dried in a second multiphase plate heat exchanger (14) on the one hand with hygroscopic solution (17a, 17b) and is conducted on the other hand in countercurrent to cold fresh air (15) coming from the ambient environment (A), which fresh air is simultaneously humidified by water (18) and heated by drying the exhaust air (16) and where said humidified and slightly heated fresh air is isoenthalpically dried and heated in a third multiphase plate heat exchanger (14) serving as an air dryer (14d) and from there is supplied to the heating of the room -B-.

13. Method according to one of claims 5 to 8, comprising a combination of two multiphase plate heat exchangers according to one of claims 1 to 4, which serves to regenerate diluted hygroscopic solution (17b) to convert it back into concentrated hygroscopic solution (17a) by dehydration, **characterized in that** fresh air (15) is fed into the primary side (14a) of a first multiphase plate heat exchanger (14), where it flows in countercurrent to heated diluted hygroscopic solution (17c) wetting the active surface (13a) of said multiphase plate heat exchanger (14), and after it is heated thereby and almost saturated with moisture it reaches a second multiphase plate heat exchanger (14) serving as an air humidifier (14c), where the active surface (13a) is wetted with hot water so that the fresh air (15) is further heated and humidified, and where said fresh air (15) is thereafter passed again to the first multiphase plate heat exchanger (14), but to its secondary side (14b), where it cools again and condenses the excess steam on the active surface (13a) of said first multiphase plate heat exchanger (14), thereby providing the heat required for dehydration from the diluted hygroscopic solution (17b).

## Revendications

1. Échangeur de chaleur multiphase (14) pour deux fluides gazeux (1, 2) ou plus, lequel échangeur de chaleur multiphase (14) présente plusieurs compartiments (14a, 14b) formés par des plaques d'échangeur de chaleur (13) et séparés les uns des autres par des surfaces actives (13a), lesquelles surfaces actives (13a) sont conçues pour être mouillées sur une surface ou les deux, en vue de la transmission de chaleur entre les fluides (1, 2) en question, par un liquide ou deux liquides (3, 4) différents qui s'écoulent lentement, afin d'être en interaction directe avec les fluides (1, 2) en question de sorte qu'une évaporation ou une condensation ou, à cause des changements de concentration qui se produisent alors dans les liquides, une cristallisation ou une dissolution de cristaux puissent avoir lieu, des pompes (11, 12) étant prévues pour pomper ces liquides (3, 4) par l'extérieur jusqu'à leurs positions d'entrée (9a, 10a) spécifiques entre les plaques d'échangeur de chaleur (13) afin qu'ils puissent se déplacer à partir de là à travers l'échangeur de chaleur à plaques (14) sous la forme d'un film de liquide mouillant le long des surfaces actives (13a), les fluides (1, 2) et liquides (3, 4) associés pouvant s'écouler en parallèle ou à contre-sens les uns des autres, **caractérisé en ce que** l'arrivée de liquide d'un réservoir accumulateur aux petites ouvertures (9a, 10a) servant de positions d'entrée entre les plaques d'échangeur de chaleur (13) se fait de telle sorte que l'arrivée se déploie après la pompe (11, 12) en un faisceau de capillaires (5, 7) formés de tuyaux ou de tubes débouchant dans les petites ouvertures (9a, 10a) correspondantes dans l'échangeur de chaleur, et **en ce que** dans chaque interstice entre des plaques d'échangeur de chaleur (1a, 1b), les deux surfaces contiguës peuvent être mouillées avec les liquides (3, 4).

2. Échangeur de chaleur multiphase (14) selon la revendication 1, **caractérisé en ce que** les arrivées de fluides (1, 2) ou de liquides (3, 4) ou des sections de l'échangeur de chaleur (14) lui-même sont en contact conducteur avec des fluides de régulation de la température séparés ou avec un chauffage électrique, qui peuvent chauffer ou refroidir ces zones.

3. Échangeur de chaleur à plaques multiphase (14) selon l'une des revendications précédentes, **caractérisé en ce que** les surfaces (3, 4) des surfaces actives (13a) permettent, pour la transmission de la chaleur, la répartition uniforme de la pellicule de liquide (3, 4) ou la rétention locale de cristaux ou leur transport plus loin par des moyens mécaniques tels que des rainures, une surface finement poreuse, des marques de meulage, des griffures et/ou un revêtement de fibres ainsi que par des matériaux et revêtements hydrophiles ou par une combinaison de plusieurs de ces mesures.

4. Combinaison de plusieurs échangeurs de chaleur à plaques multiphase selon l'une des revendications précédentes, **caractérisée en ce qu'**elle se compose d'un seul paquet de plaques et les différents échangeurs de chaleur partiels forment chacun des zones congruentes sur les plaques de ce paquet.

5. Procédé pour la conduite d'un échangeur de chaleur à plaques multiphase (14) selon la revendication 1 avec deux fluides gazeux (1, 2) ou plus déplacés à contre-courant ou en flux parallèles par une ou plusieurs souffleries régulables à des températures différentes et des concentrations de vapeur différentes, dans lequel les surfaces actives (13a) sont conçues pour être mouillées sur une surface ou les deux, en vue de la transmission de chaleur entre les fluides (1, 2) en question, par un liquide ou deux liquides (3, 4) différents qui s'écoulent lentement, qui sont en interaction directe avec les fluides (1, 2) en question de sorte qu'une évaporation ou une condensation ou, à cause des changements de concentration qui se produisent alors dans les liquides, une cristallisation ou une dissolution de cristaux puissent avoir lieu, ces liquides (3, 4) étant pompés par l'extérieur jusqu'à leurs positions d'entrée (9a, 10a) spécifiques entre les plaques d'échangeur de chaleur (13) et se déplaçant à partir de là à travers l'échangeur de chaleur à plaques (14) sous la forme d'un film de liquide mouillant le long des surfaces actives (13a), les fluides (1, 2) et liquides (3, 4) associés pouvant s'écouler en parallèle ou à contre-sens les uns des autres, **caractérisé en ce que** l'arrivée de liquide d'un réservoir accumulateur aux petites ouvertures (9a, 10a) servant de positions d'entrée entre les plaques d'échangeur de chaleur (13) se fait de telle sorte que l'arrivée se déploie après la pompe (11, 12) en un faisceau de capillaires (5, 7) formés de tuyaux ou de tubes débouchant dans les petites ouvertures (9a, 10a) correspondantes dans l'échangeur de chaleur, et **en ce que** dans chaque interstice entre des plaques d'échangeur de chaleur (1a, 1b), les deux surfaces contiguës peuvent être mouillées avec les liquides (3, 4).

6. Procédé selon la revendication 5, **caractérisé en ce que** lesdits liquides (3, 4) peuvent contenir de l'eau ou d'autres solvants ainsi que des sels hygroscopiques, des réfrigérants, des désinfectants ou des agents mouillants.

7. Procédé selon la revendication 5 ou 6, **caractérisé en ce que** le fluide primaire (1) est de l'air neuf chaud et humide (15) provenant de l'environnement d'une pièce à refroidir et le fluide secondaire (2) est l'air sortant usé sec et frais (16) de cette pièce à refroidir, qui s'écoule à contre-sens du fluide primaire (1), et **en ce que** les surfaces intérieures des espaces entre les plaques (1a) sont mouillées pour le fluide primaire avec une solution hygroscopique (17a), du liquide (3) et du fluide primaire (1) s'écoulant en sens contraire tandis que les surfaces intérieures des espaces entre les plaques (2a) sont mouillées pour le fluide secondaire (2) avec de l'eau (18) dont le sens d'écoulement est indifférent.

8. Procédé selon l'une des revendications 5 à 7, servant à la régénération d'une solution hygroscopique diluée, **caractérisé en ce que** le fluide primaire (1) est de l'air neuf chaud et humide (15) provenant de l'environnement d'une pièce à refroidir et **en ce que** les surfaces intérieures des espaces entre les plaques (1a) pour le fluide primaire sont mouillés avec une solution hygroscopique (17c) diluée préchauffée en outre selon la revendication 2 à contre-courant du fluide primaire (1) et **en ce que** le fluide secondaire (2) qui s'écoule à contre-courant du fluide primaire (1) est le même air frais (15c) mais réchauffé, qui est chauffé après le passage primaire à travers l'échangeur de chaleur multiphase (14) et presque saturé de vapeur, et **en ce que** se forme sur les surfaces intérieures des espaces entre les plaques (2a) pour le fluide secondaire (2), lors de leur refroidissement, de l'eau de condensation qui sort de l'échangeur de chaleur multiphase (14) en étant refroidie dans le même sens par le fluide secondaire (2).

9. Procédé selon l'une des revendications 5 à 8 avec une combinaison de deux échangeurs de chaleur à plaques multiphase, **caractérisé en ce que** de l'air sortant (16) d'une pièce (B) à refroidir est humidifié de façon isenthalpique jusqu'à son point de rosée et refroidi dans un premier échangeur de chaleur à plaques multiphase (14) servant d'humidificateur d'air (14c), puis humidifié et réchauffé dans un deuxième échangeur de chaleur à plaques multiphase (14) par de l'eau (18), d'une part, et amené d'autre part à contre-courant par rapport à un air neuf chaud et humide (15) provenant de l'environnement (A), qui est séché en même temps par une solution hygroscopique (17a, 17b) et refroidi presque jusqu'au point de rosée de la pièce (B) à refroidir.

10. Procédé selon la revendication 9 avec un troisième échangeur de chaleur à plaques multiphase selon l'une des revendications 1 à 4, **caractérisé en ce que** l'air neuf (15) sortant du deuxième échangeur de chaleur à plaques multiphase (14), séché et refroidi presque jusqu'au point de rosée de la pièce (B) à refroidir, est encore refroidi de façon isenthalpique dans le troisième échangeur de chaleur à plaques multiphase (14) servant d'humidificateur d'air (14c).

11. Procédé selon l'une des revendications 9 ou 10 avec un échangeur de chaleur à plaques multiphase (14) servant de sécheur d'air (14d) selon l'une des revendications 1 à 4, **caractérisé en ce que** l'air neuf chaud et humide (15) provenant de l'environnement (A) est d'abord préséché dans un échangeur de chaleur à plaques multiphase (14) servant de sécheur d'air (14d) par chauffage isenthalpique au moyen d'une solution hygroscopique (17a, 17b) avant d'être refroidi dans l'échangeur de chaleur à plaques multiphase (14) proprement dit à contre-courant de l'évacuation (16) et séché encore avec de la solution hygroscopique (17a, 17b).

12. Procédé selon l'une des revendications 5 à 8 muni d'une combinaison de trois échangeurs de chaleur à plaques multiphase selon l'une des revendications 1 à 4, **caractérisé en ce que** de l'air sortant (16) d'une pièce (B) à chauffer est humidifié de façon isenthalpique dans un premier échangeur de chaleur à plaques multiphase (14) servant d'humidificateur d'air (14c) et séché ensuite dans un deuxième échangeur de chaleur à plaques multiphase (14), d'une part, avec la solution hygroscopique (17a, 17b) et acheminé d'autre part à contre-courant d'un air neuf froid (15) provenant de l'environnement (A), qui est en même temps humidifié par de l'eau (18) et chauffé par le séchage de l'air sortant (16) et dans lequel cet air humidifié et légèrement réchauffé est séché de façon isenthalpique et chauffé dans un troisième échangeur de chaleur à plaques multiphase (14) servant de sécheur d'air (14d) et amené à partir de celui-ci au chauffage de la pièce (B).

13. Procédé selon l'une des revendications 5 à 8 muni d'une combinaison de deux échangeurs de chaleur à plaques multiphase selon l'une des revendications 1 à 4, servant à la régénération de solution hygroscopique (17b) diluée pour la reconvertir par extraction de l'eau en solution hygroscopique (17a) concentrée, **caractérisé en ce que** de l'air neuf (15) est amené sur le côté primaire (14a) d'un premier échangeur de chaleur à plaques multiphase (14) où il circule à contre-courant de solution hygroscopique (17c) diluée réchauffée mouillant la surface active (13a) de cet échangeur de chaleur à plaques multiphase (14) et, après qu'il s'est réchauffé et presque saturé d'humidité au passage, parvient dans un deuxième échangeur de chaleur à plaques multiphase (14) servant d'humidificateur d'air (14c), où la surface active (13a) est mouillée avec de l'eau chaude de sorte que l'air neuf (15) est encore chauffé et humidifié, et cet air neuf (15) est ensuite amené au premier échangeur de chaleur à plaques multiphase (14) mais sur le côté secondaire (14b) de celui-ci, où il est à nouveau refroidi et la vapeur excédentaire se condense sur la surface active (13a) de ce premier échangeur de chaleur à plaques multiphase (14), ce qui libère la chaleur nécessaire pour extraire l'eau de la solution hygroscopique (17b) diluée.
